# EUROPEAN PATENT APPLICATION

(11) **EP 4 016 947 A1**
(43) Date of publication of application: **22.06.2022**
(21) Application number: 21197944.8
(22) Date of filing: 21.09.2021
(51) Int. Cl.: H04L 27/36, H04L 25/03

(54) **DIGITAL PRE-DISTORTION (DPD) ESTIMATION WINDOW SEARCH**

(30) Priority: 15.12.2020 US 202017122468
(71) Applicant: INTEL Corporation, Santa Clara, CA 95054 (US)
(72) Inventor: JANN, Benjamin, Hillsboro, 97124 (US); CHANCE, Gregory, Chandler, 85224 (US); PAWLIUK, Peter, Tempe, 85284 (US)
(74) Representative: Viering, Jentschura & Partner mbB Patent- und Rechtsanwälte

(57) **Abstract**

An apparatus for transmitting output signals includes a pre-distortion circuit configured to perform digital pre-distortion (DPD) on input signal samples using a plurality of DPD coefficients to generate a plurality of pre-distorted samples. The apparatus further includes an estimation window search circuit configured to determine a signal power characteristic for each pre-distorted sample of the plurality of pre-distorted samples, and select a subset of the plurality of pre-distorted samples based on the determined signal power characteristics. The subset of the plurality of pre-distorted samples is selected to fit within a predetermined estimation window size. The plurality of DPD coefficients is updated based on the subset of the plurality of pre-distorted samples.

## Description

### TECHNICAL FIELD

Various embodiments generally may relate to the field of radio frequency (RF) signal amplification and transmission. Some embodiments relate to digital pre-distortion (DPD) estimation, and more specifically, DPD estimation window search.

### BACKGROUND

In closed-loop DPD signal processing systems (e.g., a transceiver system) the estimation of coefficients is performed on live transmitted waveforms. The randomness of these waveforms causes the estimation to have a significant variance, which causes the linearity performance of the transmitter to vary greatly. To obtain consistent linearity and efficiency benefits from DPD, a reduction in this variance may be considered.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 is a block diagram of a radio architecture, in accordance with some embodiments;
FIG. 2 illustrates a front-end module circuitry for use in the radio architecture of FIG. 1, in accordance with some embodiments;
FIG. 3 illustrates a radio IC circuitry for use in the radio architecture of FIG. 1, in accordance with some embodiments;
FIG. 4 illustrates a baseband processing circuitry for use in the radio architecture of FIG. 1, in accordance with some embodiments;
FIG. 5 illustrates a schematic diagram of a pre-distortion circuit, which can be used in connection with the disclosed DPD techniques, in accordance with some embodiments;
FIG. 6 illustrates a schematic diagram of a transmitter circuit using a pre-distortion circuit operating in connection with disclosed DPD techniques, in accordance with some embodiments;
FIG. 7 is a flow diagram of a method for performing DPD within the transmitter circuit of FIG. 6, in accordance with some embodiments; and
FIG. 8 illustrates a DPD estimation window search which can be performed by the estimation window search circuitry within the transmitter of FIG. 6, in accordance with some embodiments;
FIG. 9 illustrates a circular buffer which can be used to store indices of detected signal peaks during a DPD estimation window search, in accordance with some embodiments;
FIG. 10 illustrates detected signal peaks during a DPD estimation window search, in accordance with some embodiments;
FIG. 11 illustrates a transmitter with a feedback receiver performing DPD estimation window search using the disclosed techniques, in accordance with some embodiments;
FIG. 12 is a flow diagram of a method for performing a DPD estimation window search, in accordance with some embodiments; and
FIG. 13 is a flow diagram of a method for performing DPD, in accordance with some embodiments; and
FIG. 14 illustrates a block diagram of an example machine upon which any one or more of the operations/techniques (e.g., methodologies) discussed herein may perform.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

The following description and the drawings sufficiently illustrate specific embodiments to enable those skilled in the art to practice them. Other embodiments may incorporate structural, logical, electrical, process, and other changes. Portions and features of some embodiments may be included in or substituted for, those of other embodiments. Embodiments outlined in the claims encompass all available equivalents of those claims.

Techniques disclosed herein can be used to perform a DPD estimation windows search resulting in the usage of a significantly lower number of signal samples in comparison to conventional techniques (which use a large window of samples for DPD estimation, use error-checking mechanisms to detect when DPD has been degraded, and average DPD coefficients from multiple estimations). DPD processing using such conventional techniques are associated with the following drawbacks: (a) the number of samples that are required to reduce the variance is significant, which greatly increases the latency, memory requirements, and complexity; (b) checking for degradation after it has occurred may be inefficient because it indicates that for a period of time the transmitter may have been operated with a linearity that violated standards requirements; (c) averaging DPD coefficients from multiple estimations delivers more consistent results but performance is average rather than optimum.

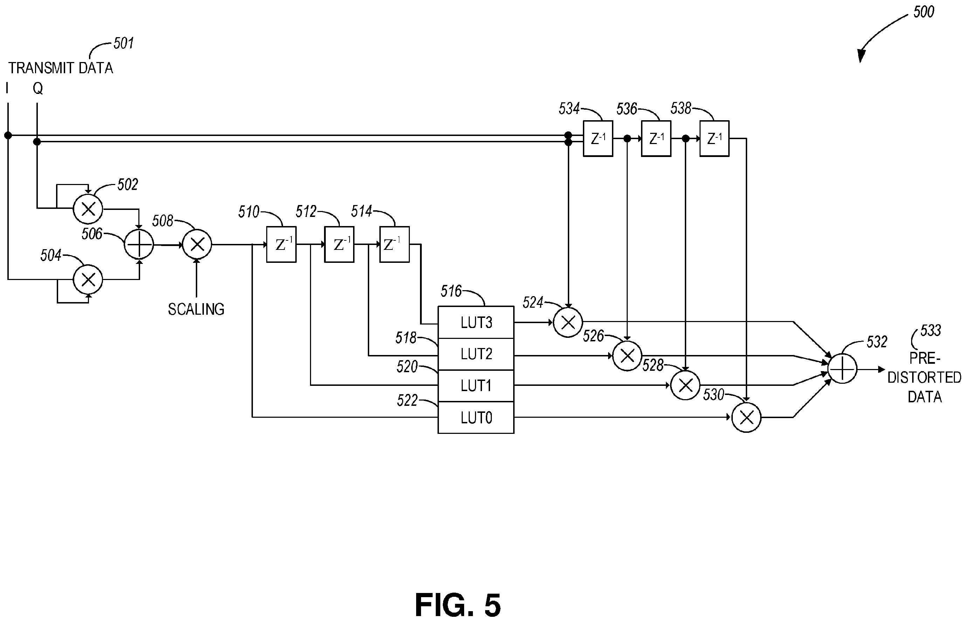

In accordance with disclosed techniques for a DPD estimation windows search, as the transmit waveform is captured, the samples are analyzed to determine an optimal DPD estimation window (during which to perform DPD estimation of DPD coefficients). In some aspects, the analysis includes detecting a signal power characteristic for input signal samples. Detecting the signal power characteristic may include detecting an average power over a time period or detecting an instantaneous power level. For example, a group of peaks in the squared signal amplitude may be detected that exceed a programmable threshold and lie within a predetermined estimation window size. The number of peaks and the location within the predetermined estimation window can be used as decision criteria for finding the optimal window in the waveform for sample selection. The disclosed techniques for DPD estimation window search reduce the variation in closed-loop DPD performance caused by the random variation of live waveforms. Additionally, reducing the variation in performance and achieving optimal performance allows a transmitter to operate with consistently higher linearity and efficiency. In some aspects, the disclosed techniques may be implemented in hardware or firmware (e.g., as discussed in connection with FIG. 5 - FIG. 14).

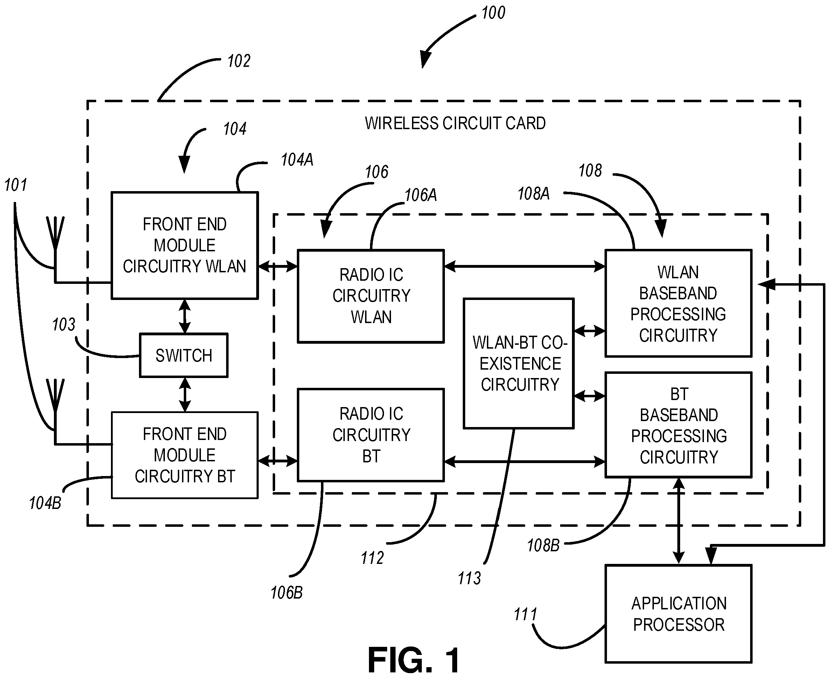

FIG. 1 is a block diagram of a radio architecture 100 in accordance with some embodiments. The radio architecture 100 may be implemented in a computing device including user equipment (UE), a base station (e.g., a next generation Node-B (gNB), enhanced Node-B (eNB)), a smartphone, or another type of wired or wireless device using synthesizer circuitry with frequency estimation. The radio architecture 100 may include radio front-end module (FEM) circuitry 104, radio IC circuitry 106, and baseband processing circuitry 108. Radio architecture 100 as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 104 may include a WLAN or Wi-Fi FEM circuitry 104A and a Bluetooth (BT) FEM circuitry 104B. The WLAN FEM circuitry 104A may include a receive signal path comprising circuitry configured to operate on WLAN RF signals received from one or more antennas 101, to amplify the received signals, and to provide the amplified versions of the received signals to the WLAN radio IC circuitry 106A for further processing. The BT FEM circuitry 104B may include a receive signal path which may include circuitry configured to operate on BT RF signals received from the one or more antennas 101, to amplify the received signals and to provide the amplified versions of the received signals to the BT radio IC circuitry 106B for further processing. The FEM circuitry 104A may also include a transmit signal path which may include circuitry configured to amplify WLAN signals provided by the radio IC circuitry 106A for wireless transmission by the one or more antennas 101. Besides, the FEM circuitry 104B may also include a transmit signal path which may include circuitry configured to amplify BT signals provided by the radio IC circuitry 106B for wireless transmission by the one or more antennas. In the embodiment of FIG. 1, although FEM 104A and FEM 104B are shown as being distinct from one another, embodiments are not so limited and include within their scope the use of a FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 106 as shown may include WLAN radio IC circuitry 106A and BT radio IC circuitry 106B. The WLAN radio IC circuitry 106A may include a receive signal path which may include circuitry to down-convert WLAN RF signals received from the FEM circuitry 104A and provide baseband signals to WLAN baseband processing circuitry 108A. The BT radio IC circuitry 106B may, in turn, include a receive signal path which may include circuitry to down-convert BT RF signals received from the FEM circuitry 104B and provide baseband signals to BT baseband processing circuitry 108B. The WLAN radio IC circuitry 106A may also include a transmit signal path which may include circuitry to up-convert WLAN baseband signals provided by the WLAN baseband processing circuitry 108A and provide WLAN RF output signals to the FEM circuitry 104A for subsequent wireless transmission by the one or more antennas 101. The BT radio IC circuitry 106B may also include a transmit signal path which may include circuitry to up-convert BT baseband signals provided by the BT baseband processing circuitry 108B and provide BT RF output signals to the FEM circuitry 104B for subsequent wireless transmission by the one or more antennas 101. In the embodiment of FIG. 1, although radio IC circuitries 106A and 106B are shown as being distinct from one another, embodiments are not so limited and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

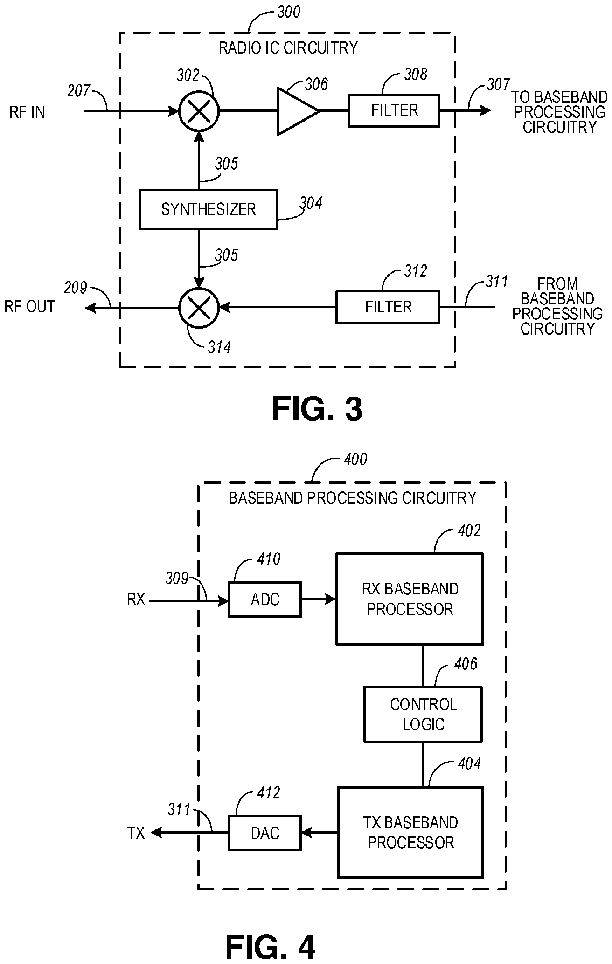

In some aspects, the radio IC circuitry 106 (e.g., the WLAN radio IC circuitry 106A and the BT radio IC circuitry 106B) uses synthesizer circuitry (e.g., synthesizer circuitry illustrated in FIG. 3 or a digital frequency synthesizer illustrated in FIG. 5) using one or more of the disclosed techniques for frequency estimation.

Baseband processing circuity 108 may include a WLAN baseband processing circuitry 108A and a BT baseband processing circuitry 108B. The WLAN baseband processing circuitry 108A may include a memory, such as, for example, a set of RAM arrays in a Fast Fourier Transform (FFT) or Inverse Fast Fourier Transform (IFFT) block (not shown) of the WLAN baseband processing circuitry 108A. Each of the WLAN baseband processing circuitry 108A and the BT baseband processing circuitry 108B may further include one or more processors and control logic to process the signals received from the corresponding WLAN or BT receive signal path of the radio IC circuitry 106, and to also generate corresponding WLAN or BT baseband signals for the transmit signal path of the radio IC circuitry 106. Each of the baseband processing circuitries 108A and 108B may further include physical layer (PHY) and medium access control layer (MAC) circuitry and may further interface with the application processor 111 for generation and processing of the baseband signals and for controlling operations of the radio IC circuitry 106.

Referring still to FIG. 1, according to the shown embodiment, WLAN-BT coexistence circuitry 113 may include logic providing an interface between the WLAN baseband processing circuitry 108A and the BT baseband processing circuitry 108B to enable use cases requiring WLAN and BT coexistence. In addition, a switch 103 may be provided between the WLAN FEM circuitry 104A and the BT FEM circuitry 104B to allow switching between the WLAN and BT radios according to application needs. In addition, although the one or more antennas 101 are depicted as being respectively connected to the WLAN FEM circuitry 104A and the BT FEM circuitry 104B, embodiments include within their scope the sharing of one or more antennas as between the WLAN and BT FEMs, or the provision of more than one antenna connected to each of FEM 104A or 104B.

In some embodiments, the front-end module circuitry 104, the radio IC circuitry 106, and the baseband processing circuitry 108 may be provided on a single radio card, such as wireless radio card 102. In some other embodiments, the one or more antennas 101, the FEM circuitry 104, and the radio IC circuitry 106 may be provided on a single radio card. In some other embodiments, the radio IC circuitry 106 and the baseband processing circuitry 108 may be provided on a single chip or integrated circuit (IC), such as IC 112.

In some embodiments, the wireless radio card 102 may include a WLAN radio card and may be configured for Wi-Fi communications, although the scope of the embodiments is not limited in this respect. In some of these embodiments, the radio architecture 100 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers. In some embodiments, the wireless radio card 102 may include a platform controller hub (PCH) system-on-a-chip (SOC) and a central processing unit (CPU)/host SOC.

In some of these multicarrier embodiments, radio architecture 100 may be part of a Wi-Fi communication station (STA) such as a wireless access point (AP), a base station, or a mobile device including a Wi-Fi enabled device. In some of these embodiments, radio architecture 100 may be configured to transmit and receive signals in accordance with specific communication standards and/or protocols, such as any of the Institute of Electrical and Electronics Engineers (IEEE) standards including, 802.11n-2009, IEEE 802.11-2012, 802.11n-2009, 802.11ac, IEEE 802.11-2016, and/or 802.11ax standards and/or proposed specifications for WLANs, although the scope of embodiments is not limited in this respect. Radio architecture 100 may also be suitable to transmit and/or receive communications in accordance with other techniques and standards, including a 3^{rd} Generation Partnership Project (3GPP) standard, including a communication standard used in connection with 5G or new radio (NR) communications.

In some embodiments, the radio architecture 100 may be configured for high-efficiency (HE) Wi-Fi communications in accordance with the IEEE 802.11ax standard or another standard associated with wireless communications. In these embodiments, the radio architecture 100 may be configured to communicate in accordance with an OFDMA technique, although the scope of the embodiments is not limited in this respect.

In some other embodiments, the radio architecture 100 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1, the BT baseband processing circuitry 108B may be compliant with a Bluetooth (BT) connectivity standard such as Bluetooth, Bluetooth 4.0 or Bluetooth 5.0, or any other iteration of the Bluetooth Standard. In embodiments that include BT functionality as shown for example in FIG. 1, the radio architecture 100 may be configured to establish a BT synchronous connection-oriented (SCO) link and or a BT low energy (BT LE) link. In some of the embodiments that include functionality, the radio architecture 100 may be configured to establish an extended SCO (eSCO) link for BT communications, although the scope of the embodiments is not limited in this respect. In some of these embodiments that include a BT functionality, the radio architecture may be configured to engage in a BT Asynchronous Connection-Less (ACL) communications, although the scope of the embodiments is not limited in this respect. In some embodiments, as shown in FIG. 1, the functions of a BT radio card and WLAN radio card may be combined on a single wireless radio card, such as the single wireless radio card 102, although embodiments are not so limited, and include within their scope discrete WLAN and BT radio cards

In some embodiments, the radio architecture 100 may include other radio cards, such as a cellular radio card configured for cellular (e.g., 3GPP such as LTE, LTE-Advanced, or 5G communications).

In some IEEE 802.11 embodiments, the radio architecture 100 may be configured for communication over various channel bandwidths including bandwidths having center frequencies of about 900 MHz, 2.4 GHz, 5 GHz, and bandwidths of about 1 MHz, 2 MHz, 2.5 MHz, 4 MHz, 5MHz, 8 MHz, 10 MHz, 16 MHz, 20 MHz, 40MHz, 80MHz (with contiguous bandwidths) or 80+80MHz (160MHz) (with non-contiguous bandwidths). In some embodiments, a 320 MHz channel bandwidth may be used. The scope of the embodiments is not limited with respect to the above center frequencies, however.

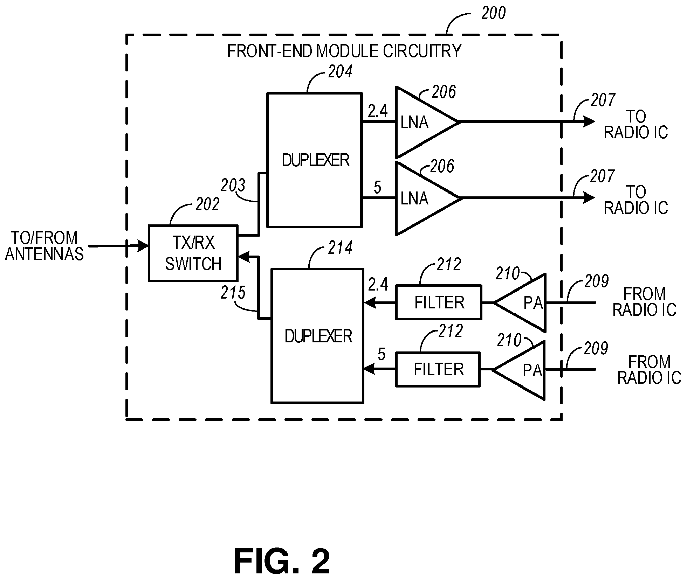

FIG. 2 illustrates FEM circuitry 200 in accordance with some embodiments. The FEM circuitry 200 is one example of circuitry that may be suitable for use as the WLAN and/or BT FEM circuitry 104A/104B (FIG. 1), although other circuitry configurations may also be suitable.

In some embodiments, the FEM circuitry 200 may include a TX/RX switch 202 to switch between transmit (TX) mode and receive (RX) mode operation. The FEM circuitry 200 may include a receive signal path and a transmit signal path. The receive signal path of the FEM circuitry 200 may include a low-noise amplifier (LNA) 206 to amplify received RF signals 203 and provide the amplified received RF signals 207 as an output (e.g., to the radio IC circuitry 106 (FIG. 1)). The transmit signal path of the FEM circuitry 200 may include a power amplifier (PA) to amplify input RF signals 209 (e.g., provided by the radio IC circuitry 106), and one or more filters 212, such as band-pass filters (BPFs), low-pass filters (LPFs) or other types of filters, to generate RF signals 215 for subsequent transmission (e.g., by the one or more antennas 101 (FIG. 1)).

In some dual-mode embodiments for Wi-Fi communication, the FEM circuitry 200 may be configured to operate in either the 2.4 GHz frequency spectrum or the 5 GHz frequency spectrum. In these embodiments, the receive signal path of the FEM circuitry 200 may include a receive signal path duplexer 204 to separate the signals from each spectrum as well as provide a separate LNA 206 for each spectrum as shown. In these embodiments, the transmit signal path of the FEM circuitry 200 may also include a power amplifier 210 and one or more filters 212, such as a BPF, an LPF, or another type of filter for each frequency spectrum, and a transmit signal path duplexer 214 to provide the signals of one of the different spectrums onto a single transmit path for subsequent transmission by the one or more antennas 101 (FIG. 1). In some embodiments, BT communications may utilize the 2.4 GHz signal paths and may utilize the same FEM circuitry 200 as the one used for WLAN communications.

FIG. 3 illustrates radio IC circuitry 300 in accordance with some embodiments. The radio IC circuitry 300 is one example of circuitry that may be suitable for use as the WLAN or BT radio IC circuitry 106A/106B (FIG. 1), although other circuitry configurations may also be suitable.

In some embodiments, the radio IC circuitry 300 may include a receive signal path and a transmit signal path. The receive signal path of the radio IC circuitry 300 may include mixer circuitry 302, such as, for example, down-conversion mixer circuitry, amplifier circuitry 306, and filter circuitry 308. The transmit signal path of the radio IC circuitry 300 may include at least filter circuitry 312 and mixer circuitry 314, such as up-conversion mixer circuitry. Radio IC circuitry 300 may also include synthesizer circuitry 304 for synthesizing a frequency 305 for use by the mixer circuitry 302 and the mixer circuitry 314. The mixer circuitry 302 and/or 314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 3 illustrates only a simplified version of a radio IC circuitry and may include, although not shown, embodiments where each of the depicted circuitries may include more than one component. For instance, mixer circuitry 320 and/or 314 may each include one or more mixers, and filter circuitries 308 and/or 312 may each include one or more filters, such as one or more BPFs and/or LPFs according to application needs. For example, when mixer circuitries are of the direct-conversion type, they may each include two or more mixers.

In some embodiments, mixer circuitry 302 may be configured to down-convert RF signals 207 received from the FEM circuitry 104 (FIG. 1) based on the synthesized frequency 305 provided by the synthesizer circuitry 304. The amplifier circuitry 306 may be configured to amplify the down-converted signals and the filter circuitry 308 may include an LPF configured to remove unwanted signals from the down-converted signals to generate output baseband signals 307. Output baseband signals 307 may be provided to the baseband processing circuitry 108 (FIG. 1) for further processing. In some embodiments, the output baseband signals 307 may be zero-frequency baseband signals, although this is not a requirement. In some embodiments, mixer circuitry 302 may comprise passive mixers, although the scope of the embodiments is not limited in this respect.

In some embodiments, the mixer circuitry 314 may be configured to up-convert input baseband signals 311 based on the synthesized frequency 305 provided by the synthesizer circuitry 304 to generate RF output signals 209 for the FEM circuitry 104. The baseband signals 311 may be provided by the baseband processing circuitry 108 and may be filtered by filter circuitry 312. The filter circuitry 312 may include an LPF or a BPF, although the scope of the embodiments is not limited in this respect.

In some embodiments, the mixer circuitry 302 and the mixer circuitry 314 may each include two or more mixers and may be arranged for quadrature down-conversion and/or up-conversion respectively with the help of the synthesizer circuitry 304. In some embodiments, the mixer circuitry 302 and the mixer circuitry 314 may each include two or more mixers each configured for image rejection (e.g., Hartley image rejection). In some embodiments, the mixer circuitry 302 and the mixer circuitry 314 may be arranged for direct down-conversion and/or direct up-conversion, respectively. In some embodiments, the mixer circuitry 302 and the mixer circuitry 314 may be configured for super-heterodyne operation, although this is not a requirement.

Mixer circuitry 302 may comprise, according to one embodiment: quadrature passive mixers (e.g., for the in-phase (I) and quadrature-phase (Q) paths). In such an embodiment, RF input signal 207 from FIG. 2 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 305 of synthesizer circuitry 304 (FIG. 3). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in the duty cycle (the percentage of one period in which the LO signal is high) and/or offset (the difference between start points of the period). In some embodiments, the LO signals may have a 25% duty cycle and a 50% offset. In some embodiments, each branch of the mixer circuitry (e.g., the in-phase (I) and quadrature-phase (Q) path) may operate at a 25% duty cycle, which may result in a significant reduction in power consumption.

The RF input signal 207 (FIG. 2) may comprise a balanced signal, although the scope of the embodiments is not limited in this respect. The I and Q baseband output signals may be provided to the low-noise amplifier, such as amplifier circuitry 306 (FIG. 3) or to filter circuitry 308 (FIG. 3).

In some embodiments, the output baseband signals 307 and the input baseband signals 311 may be analog, although the scope of the embodiments is not limited in this respect. In some alternate embodiments, the output baseband signals 307 and the input baseband signals 311 may be digital. In these alternate embodiments, the radio IC circuitry may include an analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 304 may be a fractional-N synthesizer or a fractional N/N+1 synthesizer, although the scope of the embodiments is not limited in this respect as other types of frequency synthesizers may be suitable. In some embodiments, the synthesizer circuitry 304 uses one or more of the disclosed techniques for frequency estimation (e.g., the frequency estimation techniques discussed in connection with FIGS. 5-12). In some embodiments, the synthesizer circuitry 304 may be a delta-sigma synthesizer, a frequency multiplier, or a synthesizer comprising a phase-locked loop with a frequency divider. According to some embodiments, the synthesizer circuitry 304 may include a digital frequency synthesizer circuitry, such as the digital frequency synthesizer using the disclosed techniques and discussed in connection with FIG. 5. An advantage of using a digital synthesizer circuitry is that, although it may still include some analog components, its footprint may be scaled down much more than the footprint of an analog synthesizer circuitry. In some embodiments, frequency input into synthesizer circuity 304 may be provided by a voltage controlled oscillator (VCO), although that is not a requirement. A divider control input may further be provided by either the baseband processing circuitry 108 (FIG. 1) or the application processor 111 (FIG. 1) depending on the desired output frequency 305. In some embodiments, a divider control input (e.g., N) may be determined from a look-up table (e.g., within a Wi-Fi card) based on a channel number and a channel center frequency as determined or indicated by the application processor 111.

In some embodiments, synthesizer circuitry 304 may be configured to generate a carrier frequency as the output frequency 305, while in other embodiments, the output frequency 305 may be a fraction of the carrier frequency (e.g., one-half the carrier frequency, one-third the carrier frequency). In some embodiments, the output frequency 305 may be a LO frequency (fLO).

FIG. 4 illustrates a functional block diagram of baseband processing circuitry 400 in accordance with some embodiments. The baseband processing circuitry 400 is one example of circuitry that may be suitable for use as the baseband processing circuitry 108 (FIG. 1), although other circuitry configurations may also be suitable. The baseband processing circuitry 400 may include a receive baseband processor (RX BBP) 402 for processing receive baseband signals 309 provided by the radio IC circuitry 106 (FIG. 1) and a transmit baseband processor (TX BBP) 404 for generating transmit baseband signals 311 for the radio IC circuitry 106. The baseband processing circuitry 400 may also include control logic 406 for coordinating the operations of the baseband processing circuitry 400.

In some embodiments (e.g., when analog baseband signals are exchanged between the baseband processing circuitry 400 and the radio IC circuitry 106), the baseband processing circuitry 400 may include ADC 410 to convert analog baseband signals received from the radio IC circuitry 106 to digital baseband signals for processing by the RX BBP 402. In these embodiments, the baseband processing circuitry 400 may also include DAC 412 to convert digital baseband signals from the TX BBP 404 to analog baseband signals.

In some embodiments that communicate OFDM signals or OFDMA signals, such as through the baseband processing circuitry 108A, the TX BBP 404 may be configured to generate OFDM or OFDMA signals as appropriate for transmission by performing an inverse fast Fourier transform (IFFT). The RX BBP 402 may be configured to process received OFDM signals or OFDMA signals by performing an FFT. In some embodiments, the RX BBP 402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 1, in some embodiments, the one or more antennas 101 (FIG. 1) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. The one or more antennas 101 may each include a set of phased-array antennas, although embodiments are not so limited.

In some aspects, the TX BBP 404 may include suitable circuitry, logic, interfaces, and/or code and is configured to perform one or more of the DPD estimation window search functionalities discussed in connection with FIG. 5 - FIG. 14.

Although the radio architecture 100 is illustrated as having several separate functional elements, one or more of the functional elements may be combined and may be implemented by combinations of software configured elements, such as processing elements including digital signal processors (DSPs), and/or other hardware elements. For example, some elements may comprise one or more microprocessors, DSPs, field-programmable gate arrays (FPGAs), application-specific integrated circuits (ASICs), radio-frequency integrated circuits (RFICs), and combinations of various hardware and logic circuitry for performing at least the functions described herein. In some embodiments, the functional elements may refer to one or more processes operating on one or more processing elements.

FIG. 5 illustrates a schematic diagram of a digital pre-distortion (DPD) circuit 500, which can be used in connection with the disclosed DPD techniques, in accordance with some embodiments. Referring to FIG. 5, the DPD circuit 500 includes multipliers 502, 504, 508, 524, 526, 528, and 530. The DPD circuit 500 further includes delay elements 534, 536, 538, 510, 512, and 514, as well as adders 506 and 532. The DPD circuit 500 also includes look-up tables (LUTs) 516, 518, 520, and 522, with each LUT including DPD coefficients which are used by corresponding multipliers 524 - 530 to generate pre-distorted partial data used for generating the final pre-distorted data 533.

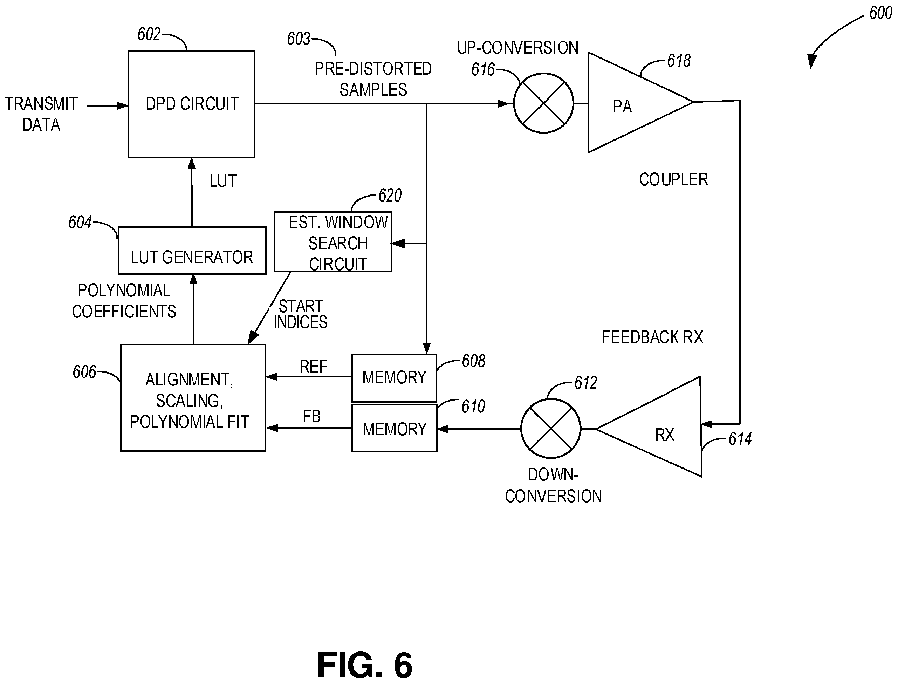

In operation, input signal samples from transmit data 501 (e.g., in-phase (I) and quadrature (Q) component digital data) are communicated to multipliers 502 and 504, where the I and Q samples are squared in multipliers 502 and 504, and added together with adder 506, to produce the power of the sample. The multiplier 508 allows for scaling of the power to accommodate gain changes. The LUT elements 516 -522 represent functions for an inverse model of the power amplifier (e.g., PA 618 in FIG. 6). The power values are used to index the LUTs to produce the functional output. The functional output multiplies with the delayed input samples at the multipliers 524-530. The outputs of all of the multipliers are added together to produce the pre-distorted output signal 533.

In some aspects, the LUTs 516-522 are a hardware-efficient way of implementing a function y = f(p), where "p" is the sample power, "y" is the LUT output, and the function "f" is part of the inverse model of a power amplifier. The most common functional representation used in DPD is a generalized memory polynomial (GMP), where each LUT represents a polynomial function "f".

Even though FIG. 5 illustrates a DPD circuit with four LUTs, the disclosure is not limited in this regard and a different number of LUTs or a different DPD implementation altogether may be used. For example, the DPD circuit 500 may be a memoryless DPD or a cross-terms DPD. The memoryless DPD may include only one LUT. The cross-terms DPD may mix different delays of the power with different delays of the IQ samples.

FIG. 6 illustrates a schematic diagram of a transmitter circuit 600 using a pre-distortion circuit operating in connection with disclosed DPD techniques, in accordance with some embodiments. Referring to FIG. 6, the transmitter circuit 600 includes a DPD circuit 602, an upconversion circuit 616, a power amplifier (PA) 618, a feedback receiver circuit 614, a down-conversion circuit 612, memory 608 and 610, an alignment circuit 606, a LUT generator 604, and an estimation window search circuit 620. The DPD circuit 602 may be the same as the DPD circuit 500 of FIG. 5.

In operation, the DPD circuit 602 performs DPD on input signal samples using a plurality of DPD coefficients to generate a plurality of pre-distorted samples 603. The pre-distorted samples are communicated to the estimation window search circuit 620 and stored as reference data (REF) in memory 608. Transmitted signal samples output by the PA 618 are fed back via the feedback receiver 614 and the downconversion circuit 612 and stored as feedback (FB) samples in memory 610. Start indices are communicated by the estimation window search circuit 620 to the alignment circuit 606 for determining polynomial coefficients used by the LUT generator 604.

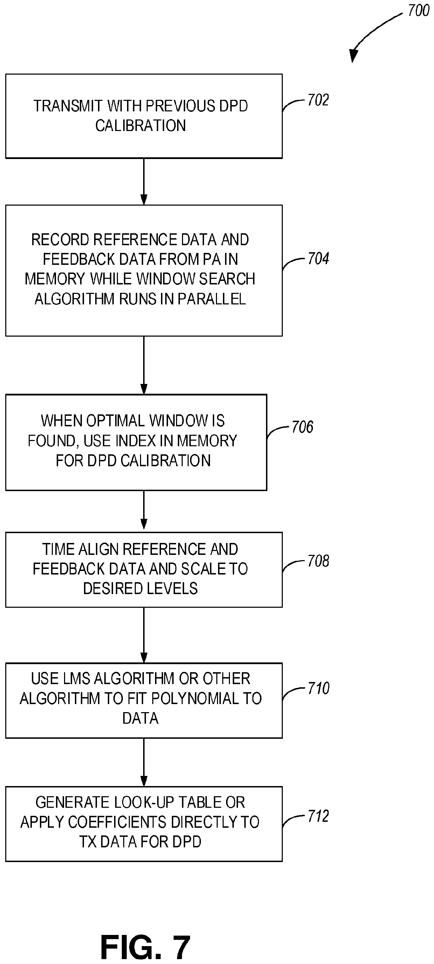

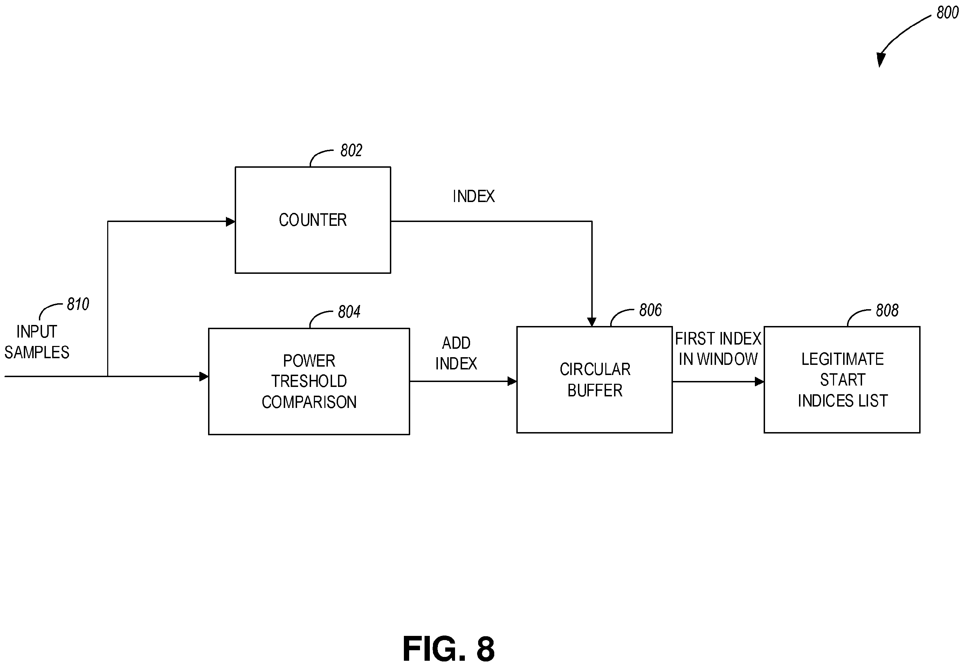

FIG. 7 is a flow diagram of method 700 for performing DPD within the transmitter circuit of FIG. 6, in accordance with some embodiments. Referring to FIG. 6 and FIG. 7, method 700 can be performed by the transmitter circuit 600. At operation 702, the transmitter circuit 600 can transmit pre-distorted signal samples 603 using prior DPD calibration of the DPD circuit 602 (e.g., using prior DPD coefficients provided by one or more LUTs for digital pre-distortion). At operation 704, the plurality of pre-distorted samples 603 is recorded as reference data in memory 608, and feedback data from the output of PA 618 is stored in memory 610, while DPD estimation window search is performed by the estimation window search circuit 620 using the plurality of pre-distorted samples 603. Additional discussion regarding functionalities performed by the estimation window search circuit 620 is provided hereinbelow in reference to FIG. 8 - FIG. 14.

At operation 706, the estimation window search circuit 620 determines an optimal DPD estimation window (e.g., by determining a legitimate start index for an optimal window of samples, which index can be stored in a legitimate start indices list as discussed in connection with FIG. 8). As used herein, the term "legitimate start index" indicates an index that can be used as a starting index for a DPD estimation window. More specifically, a signal sample corresponding to the legitimate start index can be used as a first sample within the DPD estimation window for performing DPD coefficient estimation. Subsequent indices after the legitimate start index that fit within the DPD estimation window are also used for performing DPD coefficient estimation.

The optimal DPD estimation window and determined indices associated with such window are used to access samples stored in memory 6084 determining DPD coefficients and generating corresponding LUTs for configuring the DPD circuit 602. At operation 708, the alignment circuit 606 time-aligns reference and feedback data stored in memory 608 and memory 610, as well as scales such data to desired levels. At operation 710, the alignment circuit 606 may further use a processing algorithm (e.g., a least mean square (LMS) algorithm or another type of algorithm) to fit a pre-distortion polynomial to the data. The resulting polynomial coefficients are communicated to the LUT generator 604. At operation 712, the LUT generator 604 generates a LUT with DPD coefficients for use by the DPD circuit 602. In some aspects, the DPD circuit 602 applies DPD coefficients directly received from the LUT generator 604 to transmit data to generate the pre-distorted samples 603.

FIG. 8 illustrates a DPD estimation window search which can be performed by an estimation window search circuit 800 within a transmitter (such as the transmitter of FIG. 6), in accordance with some embodiments. Referring to FIG. 8, the estimation window search circuit 800 words a counter 802, a power threshold comparison circuit 804, a circular buffer 806, and a legitimate start indices list 808.

The DPD estimation window search circuit 800 can be configured to use an algorithm (e.g., within the power threshold comparison circuit 804) that identifies an ideal waveform segment for use in DPD estimation by detecting signal power characteristics, which can include detecting average power over time. Or detecting instantaneous power levels (or "peaks"). In this regard, the peaks can be defined as instantaneous power levels in the waveform that exceed a programmable threshold. In some aspects, DPD performance is strongly dependent on the power and the peak-to-average level of the samples in the window used for estimation. By identifying a waveform segment with multiple peaks above a threshold, the size of the DPD estimation window may be decreased while increasing the DPD performance.

In operation, as input signal samples 810 are captured (e.g., transmit samples such as signal samples output from a DPD circuit), they are streamed as inputs to the counter 802 and the power threshold comparison circuit 804. When input samples 810 are captured for DPD estimation, they are passed into the power threshold comparison circuit 804 which determines the start index for the optimal DPD estimation window of samples. In some aspects, the power of the input samples 810 is compared against a programmable threshold to determine whether they are a "peak" or not. If a peak is detected, then the index for the corresponding sample from counter 802 is stored in the circular buffer 806.

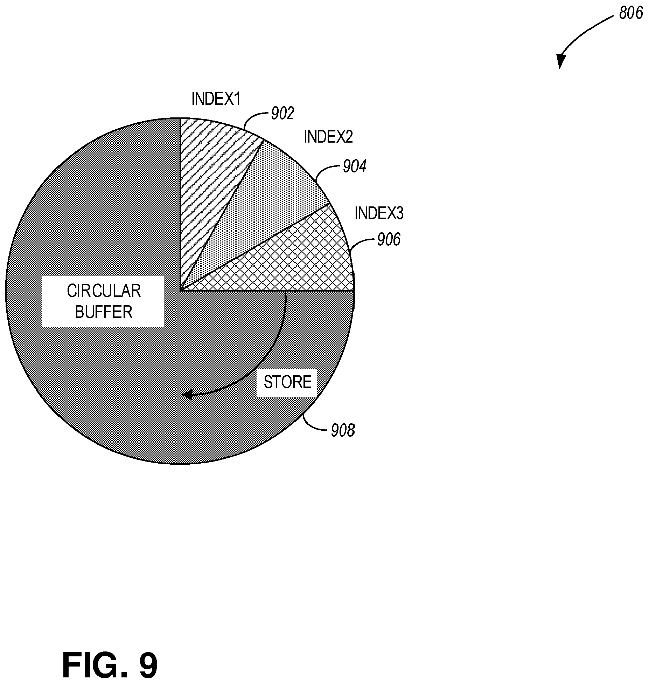

FIG. 9 illustrates the circular buffer 806 which can be used to store indices (e.g., 902, 904, 906, ..., 908) of input samples associated with detected signal peaks during a DPD estimation window search, in accordance with some embodiments.

When the circular buffer 806 loops around, a comparison is made to see if the peaks in the buffer fit within the desired DPD window length. If they do, then the first index in the buffer is stored in the legitimate start indices list 808. When DPD estimation is run, using the samples, it takes a window of samples starting with a stored legitimate index in the legitimate start indices list 808, which is the final output of the DPD estimation window search performed by the estimation window search circuit 800. Each index in the list 808 represents the start of a DPD estimation window of samples that contains at least the specified number of peaks. One of these indices may be selected as the starting index for a DPD estimation window. When the samples are retrieved from memory for use in DPD coefficient estimation, the reading of the memory starts from a signal sample associated with this index and continues to other signal samples until the end of the DPD estimation window is reached. This selected DPD estimation window will ensure optimized DPD coefficient estimation for maximum performance.

After the circular buffer loops around, the estimation window search circuit 800 may continue to detect new peaks and add them to the buffer, replacing the oldest peaks in the buffer. Once the buffer is full, checking for a legitimate start index can be done every time a new sample is overwritten. Therefore, more than one legitimate start index can be found, and the DPD estimation windows could overlap. Additional criteria, such as the distance between peaks, could be used to choose from among the legitimate start indices. If a large number of legitimate start indices are found, it is an indication that the peak threshold is set too low and needs to be raised.

Alternatively, if only a small amount of memory is available, the samples could be stored by overwriting samples circularly within the memory. When the window search finds a legitimate window, it would signal the storage of samples to stop. The last window of samples stored in the memory would then be read out for use in DPD coefficient estimation.

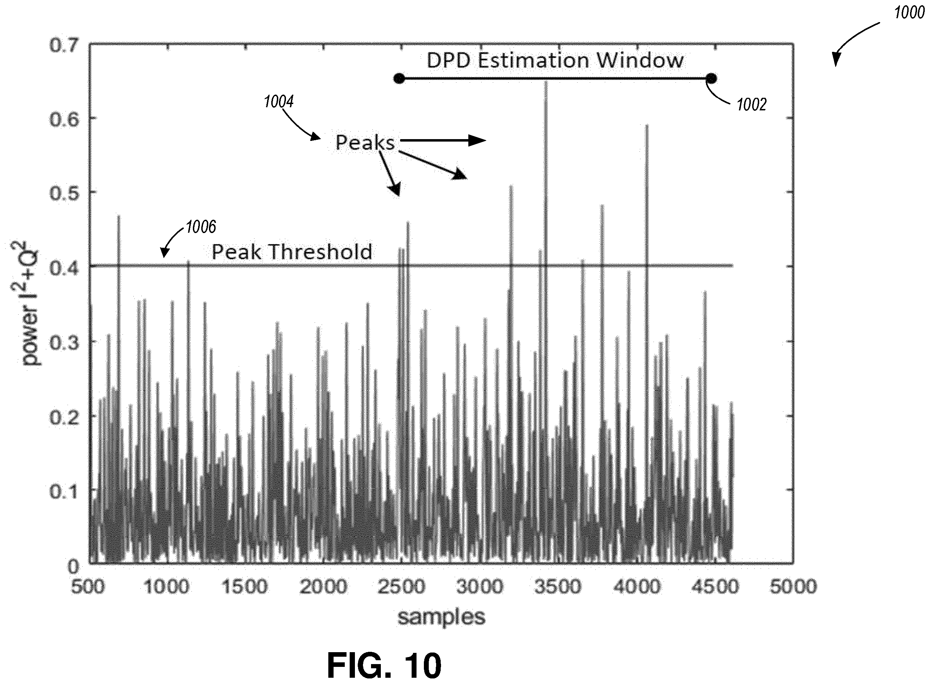

FIG. 10 illustrates a diagram 1000 of detected signal peaks during a DPD estimation window search, in accordance with some embodiments. As illustrated in FIG. 10, the DPD estimation window 1002 can include samples that are associated with peaks 1004 higher than the peak threshold 1006. In this regard, the legitimate start indices list 808 may include indexes of samples with peaks 1004 that are above the threshold 1006.

In some aspects, the power threshold comparison circuit 804 may be programmable so that it can adapt to different scenarios. For example, the power threshold can be set to detect peaks at different levels. Additionally, the size of the circular buffer 806 can be programmed to fix the number of peaks in each legitimate window. The length of the DPD estimation window can also be programmed.

In some aspects, if more than one legitimate index is found, a second search with refined peak requirements can be performed. For example, the peak threshold and/or the number of peaks could be increased. This would decrease the size of the legitimate index list and further increase the performance of DPD estimation. Alternatively, the indices could be differentiated based on whether the peaks are grouped or spread apart. By measuring the gap between the DPD window length and the cluster of peaks, these processing cases can be differentiated.

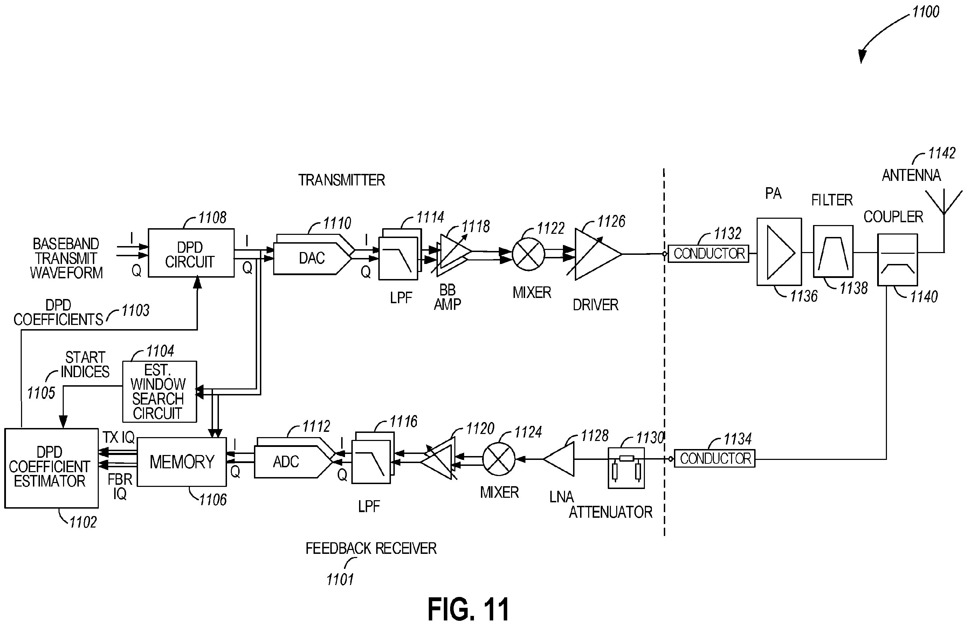

FIG. 11 illustrates a transmitter 1100 with a feedback receiver 1101 performing DPD estimation window search using the disclosed techniques, in accordance with some embodiments. Referring to FIG. 11, the transmitter 1100 includes a DPD coefficient estimator 1102, an estimation window search circuit 1104, memory 1106, a DPD circuit 1108, a digital-to-analog converter (DAC) 1110, a low-pass filter 1114, an amplifier 1118, a mixer 1122, a driver 1126, a conductor 1132, a power amplifier (PA) 1136, a filter 1138, a coupler 1140, and one or more antennas 1142. The feedback receiver 1101 includes a conductor 1134, an attenuator 1130, a low noise amplifier 1128, a mixer 1124, programmable amplifier 1120, a low-pass filter 1116, and an analog-to-digital converter (ADC) 1112.

The estimation window search circuit 1104 is configured to receive signal samples from the output of the DPD circuit 1108 and perform the functionalities discussed herein to generate a legitimate start indices list (e.g., list 808) with legitimate start indices 1105. As illustrated in FIG. 11, the legitimate start indices 1105 are communicated to the DPD coefficient estimator 1102 (which can perform functionalities similar to the alignment circuit 606 and the LUT generator 604 of FIG. 6), which generates DPD coefficients 1103 for configuring DPD performed by the DPD circuit 1108 (e.g., by updating the existing DPD coefficients with the newly generated DPD coefficients 1103). The legitimate start indices 1105 may be used by the DPD coefficient estimator 1102 to select signal samples (e.g., from output signal samples received by the feedback receiver 1101) for DPD coefficient estimation.

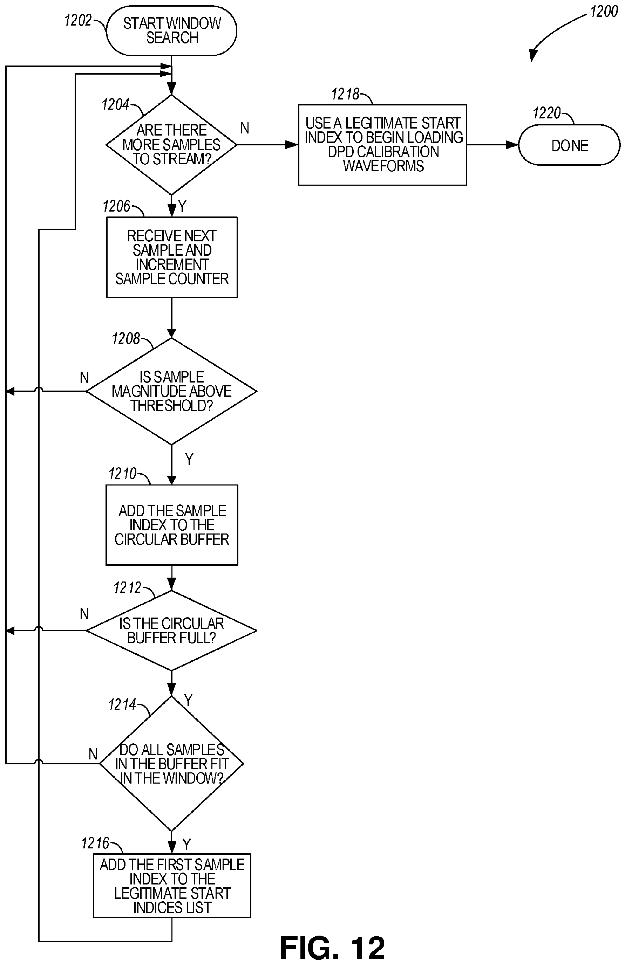

FIG. 12 is a flow diagram of method 1200 for performing a DPD estimation window search, in accordance with some embodiments. In some aspects, method 1200 can be performed by the estimation window search circuit 800 of FIG. 8. Referring to FIG. 12, at operation 1202, the estimation window search circuit 800 may start the estimation window search. At operation 1204, the estimation window search circuit 800 determines whether there are more signal samples to stream. If there are no more signal samples to stream, processing continues at operation 1218 when a legitimate start index (e.g., from the legitimate start indices list 808) is used to begin loading DPD calibration waveforms. More specifically, signal samples corresponding to the legitimate start index as well as subsequent indices from the legitimate start indices list 808 are used for DPD coefficient estimation. Processing then concludes at operation 1220.

If more signal samples are available, at operation 1206, a next sample is received and the counter 802 is incremented. At operation 1208, the estimation window search circuit 800 determines whether the sample magnitude is above a threshold. If the magnitude is not above a threshold processing resumes at operation 1204. If the magnitude is above a threshold, processing resumes at operation 1210 when the sample index is added to the circular buffer 806. Processing continues at operation 1212 when it is determined whether the circular buffer 806 is full. If the circular buffer is not full, processing resumes at operation 1204. If the circular buffer is full, processing resumes at operation 1214 when it is determined if all the samples corresponding to the indices in the circular buffer 806 fit within a predetermined DPD estimation window. If the signal samples do not fit within the DPD estimation window, processing resumes at operation 1204. If the signal samples fit within the DPD estimation window, an index of the first sample is added to the legitimate start indices list 808, and processing resumes at operation 1204.

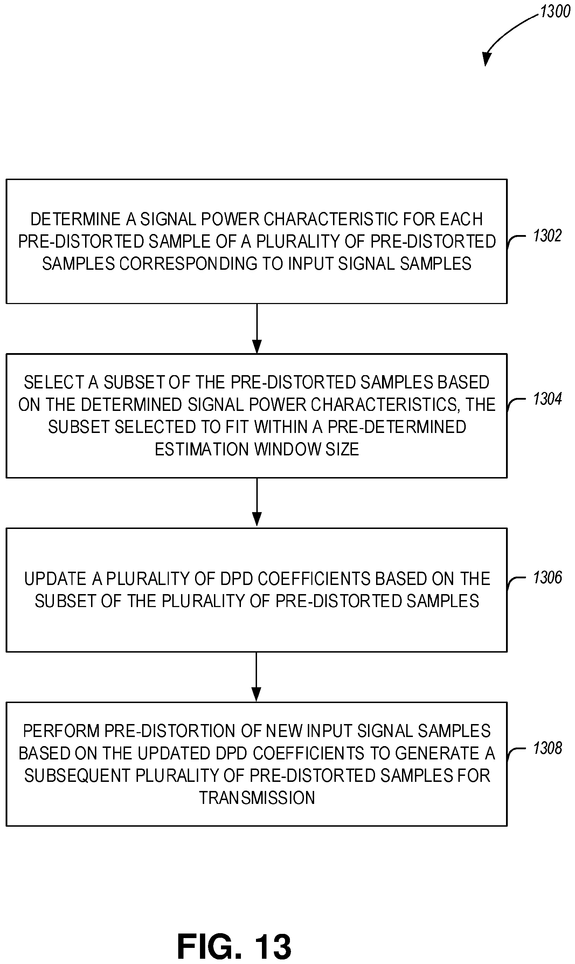

FIG. 13 is a flow diagram of method 1300 for performing DPD, in accordance with some embodiments. Referring to FIG. 13, method 1300 can be performed by the estimation window search circuit 800 of FIG. 8. At operation 1302, a signal power characteristic is determined for each pre-distorted sample of a plurality of pre-distorted samples corresponding to input signal samples. For example, the power threshold comparison circuit 804 determines an instantaneous power level for each signal sample of the input samples 810. At operation 1304, a subset of the plurality of pre-distorted samples is selected based on the determined signal power characteristics. The subset of the plurality of pre-distorted samples is selected to fit within a predetermined DPD estimation window size. At operation 1306, a plurality of DPD coefficients is updated based on the subset of the plurality of pre-distorted samples. For example, the estimation window search circuit 800 can include circuitry similar to the alignment circuit 606 and the LUT generator 604 which can be used to generate updated DPD coefficients (which can be used to update current DPD coefficients of a DPD circuit used to generate the plurality of pre-distorted samples). The updated DPD coefficients may be generated using a plurality of transmit samples corresponding to the plurality of pre-distorted samples (e.g., the pre-distorted samples are transmitted and fed back to a DPD coefficient estimator using a feedback receiver). One or more start indices are obtained corresponding to the subset of the plurality of pre-distorted samples, and the start indices are used to select from the plurality of transmit samples for DPD coefficient estimation. At operation 1308, digital pre-distortion of new input signal samples is performed based on the updated DPD coefficients to generate a subsequent plurality of pre-distorted samples for transmission.

In some aspects, the sample counter 802 is incremented for each pre-distorted sample of the plurality of pre-distorted samples, and an index is assigned to the pre-distorted sample of the plurality of pre-distorted samples. In some aspects, for each pre-distorted sample of the plurality of pre-distorted samples, the assigned index of the pre-distorted sample is stored in buffer 806 based on the signal power characteristic of the pre-distorted sample being higher than a threshold value.

In some aspects, the estimation window search circuit 800 is further configured to determine whether buffer 806 is full based on a number of indices stored in the buffer. The estimation window search circuit 800 is further configured to select the pre-distorted samples corresponding to the indices stored in the buffer as the subset when the buffer is full and the pre-distorted samples corresponding to the indices stored in the buffer fit within the predetermined estimation window size.

In some aspects, the estimation window search circuit 800 is further configured to store a first index of the indices in the buffer as a legitimate start index in the legitimate start indices list 808. The estimation window search circuit 800 is further configured to receive a plurality of transmit samples via a feedback receiver, the plurality of transmit samples corresponding to the plurality of pre-distorted samples. The estimation window search circuit 800 is further configured to select one of the plurality of transmit samples corresponding to the legitimate start index as a starting sample for generating the pre-distortion coefficients. To determine the signal power characteristic the estimation window search circuit is configured to determine average power over a time period for each pre-distorted sample of the plurality of pre-distorted samples or detect instantaneous power level for each pre-distorted sample of the plurality of pre-distorted samples.

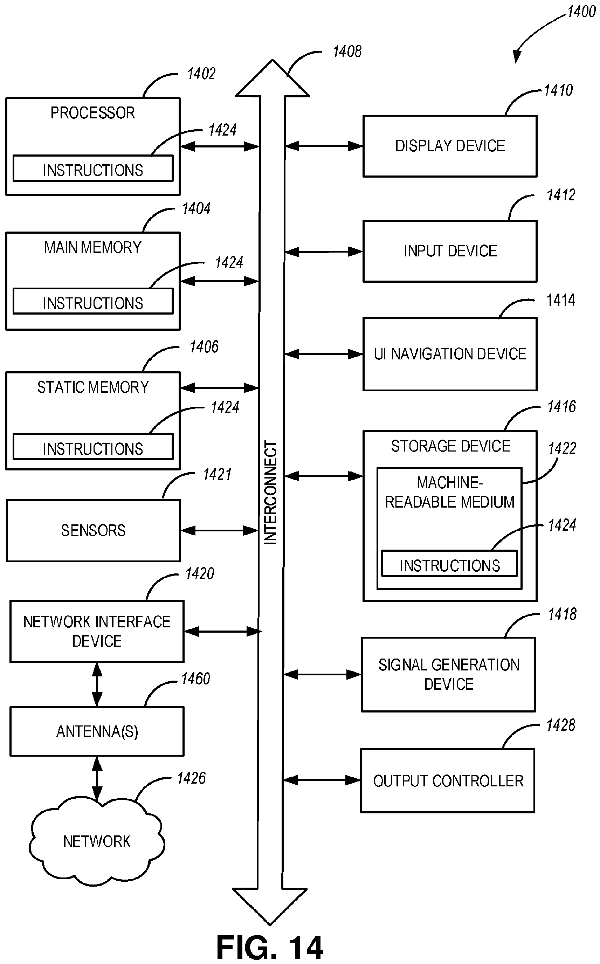

FIG. 14 illustrates a block diagram of an example machine 1400 upon which any one or more of the techniques (e.g., methodologies) discussed herein may perform. In alternative embodiments, the machine 1400 may operate as a standalone device or may be connected (e.g., networked) to other machines. In a networked deployment, machine 1400 may operate in the capacity of a server machine, a client machine, or both in server-client network environments. In an example, the machine 1400 may act as a peer machine in a peer-to-peer (P2P) (or other distributed) network environment. The machine 1400 may be a personal computer (PC), a tablet PC, a set-top box (STB), a personal digital assistant (PDA), a portable communications device, a mobile telephone, a smartphone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Machine (e.g., computer system) 1400 may include a hardware processor 1402 (e.g., a central processing unit (CPU), a graphics processing unit (GPU), a hardware processor core, or any combination thereof), a main memory 1404, and a static memory 1406, some or all of which may communicate with each other via an interlink (e.g., bus) 1408.

Specific examples of main memory 1404 include Random Access Memory (RAM), and semiconductor memory devices, which may include, in some embodiments, storage locations in semiconductors such as registers. Specific examples of static memory 1406 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

The machine 1400 may further include a display device 1410, an input device 1412 (e.g., a keyboard), and a user interface (UI) navigation device 1414 (e.g., a mouse). In an example, the display device 1410, input device 1412, and UI navigation device 1414 may be a touch screen display. The machine 1400 may additionally include a storage device (e.g., drive unit or another mass storage device) 1416, a signal generation device 1418 (e.g., a speaker), a network interface device 1420, and one or more sensors 1421, such as a global positioning system (GPS) sensor, compass, accelerometer, or other sensors. The machine 1400 may include an output controller 1428, such as a serial (e.g., universal serial bus (USB), parallel, or other wired or wireless (e.g., infrared(IR), near field communication (NFC), etc.) connection to communicate or control one or more peripheral devices (e.g., a printer, card reader, etc.). In some embodiments, the processor 1402 and/or instructions 1424 may comprise processing circuitry and/or transceiver circuitry.

The storage device 1416 may include a machine-readable medium 1422 on which is stored one or more sets of data structures or instructions 1424 (e.g., software) embodying or utilized by any one or more of the techniques or functions described herein. The instructions 1424 may also reside, completely or at least partially, within the main memory 1404, within static memory 1406, or within the hardware processor 1402 during execution thereof by the machine 1400. In an example, one or any combination of the hardware processor 1402, the main memory 1404, the static memory 1406, or the storage device 1416 may constitute machine-readable media.

Specific examples of machine-readable media may include non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine-readable medium 1422 is illustrated as a single medium, the term "machine-readable medium" may include a single medium or multiple media (e.g., a centralized or distributed database, and/or associated caches and servers) configured to store one or more instructions 1424.

An apparatus of the machine 1400 may be one or more of a hardware processor 1402 (e.g., a central processing unit (CPU), a graphics processing unit (GPU), a hardware processor core, or any combination thereof), a main memory 1404 and a static memory 1406, one or more sensors 1421, a network interface device 1420, antennas 1460, a display device 1410, an input device 1412, a UI navigation device 1414, a storage device 1416, instructions 1424, a signal generation device 1418, and an output controller 1428. The apparatus may be configured to perform one or more of the methods and/or operations disclosed herein. The apparatus may be intended as a component of the machine 1400 to perform one or more of the methods and/or operations disclosed herein, and/or to perform a portion of one or more of the methods and/or operations disclosed herein. In some embodiments, the apparatus may include a pin or other means to receive power. In some embodiments, the apparatus may include power conditioning hardware.

The term "machine-readable medium" may include any medium that is capable of storing, encoding, or carrying instructions for execution by the machine 1400 and that cause the machine 1400 to perform any one or more of the techniques of the present disclosure, or that is capable of storing, encoding or carrying data structures used by or associated with such instructions. Non-limiting machine-readable medium examples may include solid-state memories and optical and magnetic media. Specific examples of machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine-readable media may include non-transitory machine-readable media. In some examples, machine-readable media may include machine-readable media that is not a transitory propagating signal.

The instructions 1424 may further be transmitted or received over a communications network 1426 using a transmission medium via the network interface device 1420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others.

In an example, the network interface device 1420 may include one or more physical jacks (e.g., Ethernet, coaxial, or phone jacks) or one or more antennas to connect to the communications network 1426. In an example, the network interface device 1420 may include one or more antennas 1460 to wirelessly communicate using at least one of single-input multiple-output (SIMO), multiple-input multiple-output (MIMO), or multiple-input single-output (MISO) techniques. In some examples, the network interface device 1420 may wirelessly communicate using Multiple User MIMO techniques. The term "transmission medium" shall be taken to include any intangible medium that is capable of storing, encoding, or carrying instructions for execution by the machine 1400, and includes digital or analog communications signals or other intangible media to facilitate communication of such software.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or concerning external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at different times. The software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable the performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read-only memory (ROM); random access memory (RAM); magnetic disk storage media; optical storage media; flash memory, etc.

The above-detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof) or with respect to other examples (or one or more aspects thereof) shown or described herein.

Publications, patents, and patent documents referred to in this document are incorporated by reference herein in their entirety, as though individually incorporated by reference. In the event of inconsistent usages between this document and those documents so incorporated by reference, the usage in the incorporated reference(s) are supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in a number of environments such as part of a wireless local area network (WLAN), 3rd Generation Partnership Project (3GPP) Universal Terrestrial Radio Access Network (UTRAN), or Long-Term-Evolution (LTE) or a Long-Term-Evolution (LTE) communication system, although the scope of the disclosure is not limited in this respect.

Antennas referred to herein may comprise one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, antennas may be effectively separated to take advantage of spatial diversity and the different channel characteristics that may result between each of antennas and the antennas of a transmitting station. In some MIMO embodiments, antennas may be separated by up to 1/10 of a wavelength or more.

### Additional notes and examples:

Example 1 is an apparatus configured to generate output signals for transmission, the apparatus comprising: a pre-distortion circuit configured to perform digital pre-distortion (DPD) on input signal samples using a plurality of DPD coefficients to generate a plurality of pre-distorted samples; an estimation window search circuit configured to determine a signal power characteristic for each pre-distorted sample of the plurality of pre-distorted samples; select a subset of the plurality of pre-distorted samples based on the determined signal power characteristics, the subset of the plurality of pre-distorted samples selected to fit within a predetermined estimation window size; and update the plurality of DPD coefficients based on the subset of the plurality of pre-distorted samples.

In Example 2, the subject matter of Example 1 includes, wherein the estimation window search circuit is further configured to for each pre-distorted sample of the plurality of pre-distorted samples: increment a sample counter and assign an index to the pre-distorted sample of the plurality of pre-distorted samples.

In Example 3, the subject matter of Example 2 includes, wherein the estimation window search circuit is further configured to: for each pre-distorted sample of the plurality of pre-distorted samples: store the assigned index of the pre-distorted sample in a buffer based on the signal power characteristic of the pre-distorted sample being higher than a threshold value.

In Example 4, the subject matter of Example 3 includes, wherein the estimation window search circuit is further configured to determine whether the buffer is full based on a number of indices stored in the buffer; and select the pre-distorted samples corresponding to the indices stored in the buffer as the subset, when the buffer is full and the pre-distorted samples corresponding to the indices stored in the buffer fit within the predetermined estimation window size.

In Example 5, the subject matter of Example 4 includes, wherein the estimation window search circuit is further configured to store a first index of the indices in the buffer as a legitimate start index in a legitimate start indices list.

In Example 6, the subject matter of Example 5 includes, wherein the estimation window search circuit is further configured to receive a plurality of transmit samples via a feedback receiver, the plurality of transmit samples corresponding to the plurality of pre-distorted samples.

In Example 7, the subject matter of Example 6 includes, wherein the estimation window search circuit is further configured to select one of the plurality of transmit samples corresponding to the legitimate start index as a starting sample for generating the pre-distortion coefficients.

In Example 8, the subject matter of Examples 1-7 includes, wherein to determine the signal power characteristic the estimation window search circuit is configured to determine average power over a time period for each pre-distorted sample of the plurality of pre-distorted samples.

In Example 9, the subject matter of Examples 1-8 includes, wherein to determine the signal power characteristic the estimation window search circuit is configured to detect instantaneous power level for each pre-distorted sample of the plurality of pre-distorted samples.

Example 10 is a method for performing digital pre-distortion (DPD) on input signal samples, the method comprising: determining a signal power characteristic for each pre-distorted sample of a plurality of pre-distorted samples corresponding to input signal samples; selecting a subset of the plurality of pre-distorted samples based on the determined signal power characteristics, the subset of the plurality of pre-distorted samples selected to fit within a predetermined estimation window size; updating a plurality of DPD coefficients based on the subset of the plurality of pre-distorted samples; and performing pre-distortion of new input signal samples based on the updated DPD coefficients to generate a subsequent plurality of pre-distorted samples for transmission.

In Example 11, the subject matter of Example 10 includes, for each pre-distorted sample of the plurality of pre-distorted samples: incrementing a sample counter and assign an index to the pre-distorted sample of the plurality of pre-distorted samples.

In Example 12, the subject matter of Example 11 includes, for each pre-distorted sample of the plurality of pre-distorted samples: storing the assigned index of the pre-distorted sample in a buffer based on the signal power characteristic of the pre-distorted sample being higher than a threshold value.

In Example 13, the subject matter of Example 12 includes, determining whether the buffer is full based on a number of indices stored in the buffer; and selecting the pre-distorted samples corresponding to the indices stored in the buffer as the subset, when the buffer is full and the pre-distorted samples corresponding to the indices stored in the buffer fit within the predetermined estimation window size.

In Example 14, the subject matter of Example 13 includes, storing a first index of the indices in the buffer as a legitimate start index in a legitimate start indices list.

In Example 15, the subject matter of Example 14 includes, receiving a plurality of transmit samples via a feedback receiver, the plurality of transmit samples corresponding to the plurality of pre-distorted samples.

In Example 16, the subject matter of Example 15 includes, selectng one of the plurality of transmit samples corresponding to the legitimate start index as a starting sample for generating the pre-distortion coefficients.

In Example 17, the subject matter of Examples 10-16 includes, wherein determining the signal power characteristic further comprises: determining average power over a time period for each pre-distorted sample of the plurality of pre-distorted samples.

In Example 18, the subject matter of Examples 10-17 includes, wherein determining the signal power characteristic further comprises: detecting instantaneous power level for each pre-distorted sample of the plurality of pre-distorted samples.

Example 19 is an estimation window search apparatus comprising: a counter circuit configured to increment a sample counter and assign indices to a plurality of input samples; a power threshold comparison circuit configured to determine a signal power characteristic for each input sample of the plurality of input samples; and a circular buffer configured to store a subset of the assigned indices corresponding to a subset of the plurality of input samples, the subset of the plurality of input samples selected based on the determined signal power characteristics, and the subset of the plurality of input samples further selected to fit within a predetermined estimation window size.

In Example 20, the subject matter of Example 19 includes, wherein to determine the signal power characteristic, the power threshold comparison circuit is further configured to perform at least one of determine average power over a time period for each input sample of the plurality of input samples; and detect instantaneous power level for each input sample of the plurality of input samples.

Example 21 is at least one machine-readable medium including instructions that, when executed by processing circuitry, cause the processing circuitry to perform operations to implement any of Examples 1-20.

Example 22 is an apparatus comprising means to implement of any of Examples 1-20.

Example 23 is a system to implement any of Examples 1-20.

Example 24 is a method to implement any of Examples 1-20.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined regarding the appended claims, along with the full scope of equivalents to which such claims are entitled.

## Claims

1. An apparatus configured to generate output signals for transmission, the apparatus comprising:
a pre-distortion circuit configured to perform digital pre-distortion (DPD) on input signal samples using a plurality of DPD coefficients to generate a plurality of pre-distorted samples;
an estimation window search circuit configured to:
determine a signal power characteristic for each pre-distorted sample of the plurality of pre-distorted samples;
select a subset of the plurality of pre-distorted samples based on the determined signal power characteristics, the subset of the plurality of pre-distorted samples selected to fit within a predetermined estimation window size; and
update the plurality of DPD coefficients based on the subset of the plurality of pre-distorted samples.

2. The apparatus of claim 1, wherein the estimation window search circuit is further configured to:
for each pre-distorted sample of the plurality of pre-distorted samples:
increment a sample counter and assign an index to the pre-distorted sample of the plurality of pre-distorted samples.

3. The apparatus of claim 2, wherein the estimation window search circuit is further configured to:
for each pre-distorted sample of the plurality of pre-distorted samples:
store the assigned index of the pre-distorted sample in a buffer based on the signal power characteristic of the pre-distorted sample being higher than a threshold value.

4. The apparatus of claim 3, wherein the estimation window search circuit is further configured to:
determine whether the buffer is full based on a number of indices stored in the buffer; and
select the pre-distorted samples corresponding to the indices stored in the buffer as the subset, when the buffer is full and the pre-distorted samples corresponding to the indices stored in the buffer fit within the predetermined estimation window size.

5. The apparatus of claim 4, wherein the estimation window search circuit is further configured to:
store a first index of the indices in the buffer as a legitimate start index in a legitimate start indices list.

6. The apparatus of claim 5, wherein the estimation window search circuit is further configured to:
receive a plurality of transmit samples via a feedback receiver, the plurality of transmit samples corresponding to the plurality of pre-distorted samples.

7. The apparatus of claim 6, wherein the estimation window search circuit is further configured to:
select one of the plurality of transmit samples corresponding to the legitimate start index as a starting sample for generating the plurality of DPD coefficients.

8. The apparatus of any of claims 1-7, wherein to determine the signal power characteristic the estimation window search circuit is configured to:
determine average power over a time period for each pre-distorted sample of the plurality of pre-distorted samples.

9. The apparatus of any of claims 1-7, wherein to determine the signal power characteristic the estimation window search circuit is configured to:
detect instantaneous power level for each pre-distorted sample of the plurality of pre-distorted samples.

10. A method for performing digital pre-distortion (DPD) on input signal samples, the method comprising:
determining a signal power characteristic for each pre-distorted sample of a plurality of pre-distorted samples corresponding to input signal samples;
selecting a subset of the plurality of pre-distorted samples based on the determined signal power characteristics, the subset of the plurality of pre-distorted samples selected to fit within a predetermined estimation window size;
updating a plurality of DPD coefficients based on the subset of the plurality of pre-distorted samples; and
performing pre-distortion of new input signal samples based on the updated DPD coefficients to generate a subsequent plurality of pre-distorted samples for transmission.

11. The method of claim 10, further comprising:
for each pre-distorted sample of the plurality of pre-distorted samples:
incrementing a sample counter and assign an index to the pre-distorted sample of the plurality of pre-distorted samples.

12. The method of claim 11, further comprising:
for each pre-distorted sample of the plurality of pre-distorted samples:
storing the assigned index of the pre-distorted sample in a buffer based on the signal power characteristic of the pre-distorted sample being higher than a threshold value.

13. The method of claim 12, further comprising:
determining whether the buffer is full based on a number of indices stored in the buffer;
selecting the pre-distorted samples corresponding to the indices stored in the buffer as the subset, when the buffer is full and the pre-distorted samples corresponding to the indices stored in the buffer fit within the predetermined estimation window size; and
storing a first index of the indices in the buffer as a legitimate start index in a legitimate start indices list; and
receiving a plurality of transmit samples via a feedback receiver, the plurality of transmit samples corresponding to the plurality of pre-distorted samples.

14. An estimation window search apparatus comprising:
a counter circuit configured to increment a sample counter and assign indices to a plurality of input samples;
a power threshold comparison circuit configured to determine a signal power characteristic for each input sample of the plurality of input samples; and
a circular buffer configured to store a subset of the assigned indices corresponding to a subset of the plurality of input samples, the subset of the plurality of input samples selected based on the determined signal power characteristics, and the subset of the plurality of input samples further selected to fit within a predetermined estimation window size.

15. The estimation window search apparatus of claim 14, wherein to determine the signal power characteristic, the power threshold comparison circuit is further configured to perform at least one of:
determine average power over a time period for each input sample of the plurality of input samples; and
detect instantaneous power level for each input sample of the plurality of input samples.
